# EUROPÄISCHE PATENTANMELDUNG

(11) **EP 1 204 267 A2**
(43) Veröffentlichungstag der Anmeldung: **08.05.2002**
(21) Anmeldenummer: 01118623.6
(22) Anmeldetag: 02.08.2001
(51) Int. Cl.: H04N 1/195

(54) **Verfahren und Vorrichtung zur bildlichen Erfassung von Furnieren**

(30) Priorität: 02.11.2000 DE 10054243
(71) Anmelder: IHB Internationale Holzboerse GmbH, 85399 Hallbergmoos (DE)
(72) Erfinder: Niedermeier, Marcus R., 84036 Landshut (DE)
(74) Vertreter: Tiesmeyer, Johannes, Dr.

(57) **Zusammenfassung**

Die Erfindung betrifft ein Verfahren und ein System zur bildhaften Erfassung eines Furnierblattes (12), wobei man die Flächenseite des Furnierblattes abschnittsweise mit einer digitalen Kamera (2) fotografiert und wobei man die dabei erhaltenen Bilddaten der Abschnitte einer Bilddatenverarbeitung unterzieht, um einen Bilddatensatz zu erzeugen und zu speichern, der ein aus den Abschnitten (A) zusammengesetztes und auf einem Anzeigegerät darstellbares Bild der Flächenseite des Furnierblattes (12) repräsentiert. Der Bilddatensatz kann dazu genutzt werden, das Gesamtbild des Furnierblattes (12) ins Internet zu stellen oder auf einen austauschbaren Datenträger aufzuspeichern, der als Katalog vertrieben werden kann.

## Beschreibung

Die Erfindung betrifft ein Verfahren und ein System zur bildhaften Erfassung eines Furnierblattes, wobei man eine Flächenseite des Furnierblattes mit einer Kamera aufnimmt.

In der Holzwirtschaft sind die Furnieranbieter bestrebt, ihren Kunden die anzubietenden Furniere möglichst ansprechend zu präsentieren. Bei Furnieren kommt es im Allgemeinen auf optische Qualitätsmerkmale, insbesondere auf Strukturmerkmale, Maserungen, Farbkontraste usw., an. Solche Qualitätsmerkmale lassen sich verbal nicht erschöpfend beschreiben. Standardisierte Qualitätsbeschreibungen, wie sie bei anderen Holzsortimenten üblich sind, können somit bei Furnieren kein vollständiges Bild vermitteln. Insbesondere bei dem Handel mit hochwertigen Furnieren ist es durchaus üblich, dass die potentiellen Kunden über teils große Entfernungen zum Händler reisen, um die Furnierprodukte vor der Kaufentscheidung persönlich in Augenschein zu nehmen. Der Kunde kann auf diese Weise zuverlässige informationen über Qualität und Abmessungen der jeweiligen Furniere erlangen. Hierzu hat der Kunde jedoch einen vergleichsweise großen Aufwand, nämlich Reiseaufwand und Zeitaufwand zu betreiben, was sich in der Wertschöpfungskette, in die das betreffende Furnier einbezogen wird, kostenerhöhend auswirkt.

Der vorliegenden Erfindung liegt die Aufgabe zugrunde, ein Verfahren und ein System zur bildhaften Erfassung eines Furnierblattes bereitzustellen, um Furnierhändlern dezentral vor Ort im Furnierlager die Möglichkeit zu geben, ihre Produkte detailliert optisch zu erfassen, um Bildmaterial für potentielle Kunden bereitzustellen, welches geeignet ist, Furniere und deren Qualitätsmerkmale individuell und repräsentativ darzustellen.

Das erfindungsgemäße Verfahren, bei dem man wenigstens eine Flächenseite des Furnierblattes mit fotografischen oder/und videografischen Mitteln optisch erfasst, ist dadurch gekennzeichnet, dass man die Flächenseite des betreffenden Furnierblattes abschnittsweise mit einer farbtüchtigen, digitalen Kamera fotografiert bzw. videografiert und dass man die dabei erhaltenen Bilddaten der Abschnitte einer Bilddatenverarbeitung unterzieht, um wenigstens einen Bilddatensatz zu erzeugen und zu speichern, der ein aus den Abschnitten zusammengesetztes und auf einem Anzeigegerät darstellbares Bild bzw. eine Videobildsequenz der Flächenseite des Furnierblattes repräsentiert.

Erfindungsgemäß können die einzelnen Abschnitte des Furnierblattes mit hoher optischer Auflösung digital fotografiert werden. Die den Einzelbildern zugeordneten Bilddaten werden dann mittels einer sogenannten "Foto-Stitch-Software" verarbeitet, um einen Bilddatensatz zu erzeugen, der ein aus den Einzelbildern zusammengesetztes Gesamtbild repräsentiert.

Bei dem abschnittsweisen Fotografieren können die Bildabschnitte einander überlappen. Überlappende Bereiche werden von der Foto-Stich-Software bei der Erstellung des Gesamtbild-Datensatzes lagerichtig berücksichtigt, so dass einander überlappende Bildbereiche im Gesamtbild an der richtigen Stelle nur einmal erscheinen. Es findet somit eine Bildzusammensetzung ohne sichtbare Übergänge statt. Programme, die digitale Einzelbilder zusammensetzen, um ein Gesamtbild daraus zu erstellen, sind im Softwarehandel erhältlich.

Gemäß einer Verfahrensvariante wird der Bilddatensatz des zusammengesetzten Bildes bzw. einer Videobildsequenz auf einem austauschbaren (externen) Datenträger zusätzlich zu anderen Bilddatensätzen anderer Furnierblätter in Zuordnung zu Textdaten gespeichert, um die Furnierblätter zu katalogisieren. Austauschbare Datenträger in diesem Sinne können z.B. sein: CD-ROM, DVD-ROM, magnetooptische Speicher, Chipkarten etc. Es handelt sich somit um Speichermedien, die als computerlesbare Furnierkataloge im Handel Verwendung finden könnten. Zur Darstellung der Bilddaten könnte ein mit entsprechender Software ausgestatteter Personal Computer (PC) mit einem hochauflösenden Monitor und einem Lesegerät für den betreffenden Datenträger herangezogen werden. Dabei kann eine verkleinerte Darstellung kompletter Furnierblätter auf dem Monitor ermöglicht sein. Die Darstellungssoftware sollte Zoom-Funktionen möglich machen, um jeweils ausgewählte Ausschnittsbereiche von Furnierblattbildern in wahlweise unterschiedlichen Vergrößerungsdarstellungen am Bildschirm sichtbar zu machen, beispielsweise um die Feinstruktur eines Furniers darzustellen. Der interessierte Kunde kann somit Informationen über die Furnierqualität erhalten, die er für seine Entscheidung beim Furnierkauf benötigt.

Gemäß einer Weiterbildung des erfindungsgemäßen Verfahrens speichert man die Bilddatensätze von Furnierblättern in einem Datenspeicher, auf den über ein Computernetzwerk, insbesondere über das INTERNET, zugegriffen werden kann, um die Bilddaten auf Anforderung zu übertragen. Die hier angesprochene Internet-Anwendung ermöglicht es den Furnieranbietern, die Bilder der Furnierblätter bzw. die Videobildsequenzen in Internet-Homepages bereitzustellen. Der interessierte Kunde kann somit durch Aufruf der Internet-Homepage eines betreffenden Furnieranbieters sich ein Bild über das Furnierangebot machen. Er erhält dabei anschauliche Informationen über Strukturmerkmale, Maserungen, Abmessungen, Farbkontraste usw. von Furnierblättern.

Weiterhin kann im Rahmen der Erfindung ein Online-Furnier-Ordersystem verwirklicht werden, bei dem die betrachteten Furniere online geordert werden können. Beim Händler eingehende Order können ggf. direkt ins Warenwirtschaftssystem eingespeist werden.

Vorteilhafterweise wird beim Aufnehmen eines jeweiligen Furnierblattes ein Referenzmaßstab mitfotografiert bzw. mitvideografiert, so dass auch auf dem Gesamtbild aus dem erzeugten Bilddatensatz eine Größenreferenz erscheint, an der sich der interessierte Kunde orientieren kann.

Weiterhin wird vorgeschlagen, dass man beim Aufnehmen eines jeweiligen Furnierblattes eine Referenzfarbskala mitfotografiert bzw. mitvideografiert, die in dem zusammengesetzten Bild des Bilddatensatzes erscheint. Bei der Darstellung des Furnierblattes auf einem farbtüchtigen Bildschirm kann der interessierte Kunde bei Bedarf die Bildschirmeinstellungen ändern, um die auf dem Bildschirm erscheinende Referenzfarbskala mit einer gleichartigen Referenzfarbskala in Übereinstimmung zu bringen, die der Kunde zur Verfügung hat. Auf diese Weise kann das abgebildete Furnier weitestgehend farbecht auf einem Computerbildschirm dargestellt werden.

Das Verfahren nach der Erfindung zeichnet sich insbesondere dadurch aus, dass die üblicherweise für Gesamtbildaufnahmen ungünstigen Formate der Furnierblätter kein Hindernis für die bildhafte Erfassung darstellen. Furnierblätter der hier betrachteten Art können beispielsweise länger als 5 m sein und eine Breite haben, die kleiner als 1 m ist. Derartige Furnierformate können mit einfachen Mitteln nach dem erfindungsgemäßen Verfahren bildhaft erfasst werden und schließlich als Gesamtbild dargestellt werden. Der Betrachter kann unter Nutzung von Zoom-Funktionen des Bildanzeigesystems frei wählbare Bildausschnitte in Originalgröße oder vergrößert im Detail am Bildschirm betrachten.

Das System zur bildhaften Erfassung eines Furnierblattes kann mit relativ einfach und preiswert herzustellenden Komponenten realisiert werden und ist gekennzeichnet durch eine Bildaufnahmestation mit einer digitalen, farbtüchtigen, hochauflösenden Kamera, die an einer Kamerahalterung angeordnet ist, und eine Furnierblatthalterungseinrichtung zur Positionierung eines ausgebreiteten Furnierblattes relativ zur Kamera, wobei die digitale Kamera und die Furnierblatthalterungseinrichtung in verschiedene Bildaufnahmestellungen relativ zueinander einstellbar sind und in jeder Bildaufnahmestellung ein jeweiliger Abschnitt einer Flächenseite eines in der Furnierblatthalterungseinrichtung ausgebreiteten Furnierblattes fotografierbar oder ggf. videografierbar ist, so dass die Flächenseite abschnittsweise mittels der Kamera fotografisch abtastbar ist, um Bilddaten der jeweiligen Abschnitte zu erzeugen und zu speichern, die einer Bilddatenverarbeitungseinrichtung zur Erzeugung eines Bilddatensatzes zuführbar sind, welcher ein aus den fotografierten Abschnitten zusamengesetztes Bild oder - im Falle einer Videoaufzeichnung - eine Videobildsequenz der Furnierflächenseite repräsentiert.

Es sind verschiedene Varianten zur Realisierung des erfindungsgemäßen Systems möglich. Gemäß einer ersten Variante ist die Kamerahalterung als tragbare Rahmenkonstruktion gebaut, die z.B. entlang einer Anschlagkante in regelmäßigen Abständen entlang dem Furnierblatt in Bildaufnahmestellung aufgesetzt wird, um in definierten Abständen ineinander übergehende Abschnitte einer betreffenden Furnierblatt-Flächenseite zu fotografieren oder ggf. zu videografieren. Die Furnierblatthalterungseinrichtung kann in einem solchen Fall mit einfachsten Mitteln realisiert sein, welche das Furnierblatt im ausgebreiteten Zustand fixieren können.

Gemäß einer anderen Variante des erfindungsgemäßen Systems ist die Kamerahalterung an einer Kamerahalterungsführung verschiebbar angeordnet, so dass sie in verschiedene Stellungen relativ zu einem zu fotografierenden bzw. zu videografierenden Furnierblatt positioniert werden kann.

Gemäß einer besonders bevorzugten Ausführungsform des Systems nach der Erfindung ist es vorgesehen, dass die Furnierblatthalterungseinrichtung einen Furnierträger aufweist, auf dem ein Furnierblatt im ausgebreiteten Zustand fixierbar ist und dass der Furnierträger an einer Führungseinrichtung geführt bewegbar ist, um aufeinander folgend optisch aufzunehmende Abschnitte einer Furnierblattseite in Bildaufnahmestellung relativ zur Kamera zu positionieren. Es hat sich als vorteilhaft herausgestellt, die Kamera - abgesehen von Brennweiteneinstellungen - ortsfest zu halten und das Furnierblatt relativ zur Kamera zu bewegen, um die Bildabschnitte aufnehmen zu können.

Die Furnierblatthalterungseinrichtung kann auch ein diskontinuierlich oder ggf. kontinuierlich bewegtes Laufband oder dgl. sein, beispielsweise ein Transportband innerhalb einer Furniersortieranlage oder einer Furnierbearbeitungsanlage.

Denkbar ist auch ein System nach der Erfindung, bei dem sowohl die Kamera bzw. die Kamerahalterung als auch das Furnier bzw. die Furnierblatthalterungseinrichtung geführt bewegbar sind, um ein Furnierblatt abschnittsweise zu fotografieren oder ggf. zu videografieren.

Gemäß einer Ausgestaltung der Erfindung ist der Furnierträger als Wagen mit Rollen ausgebildet, wobei die Führungseinrichtung der Furnierblatthalterungseinrichtung Schienen aufweist, an denen die Rollen des Furnierträgers geführt abrollen können.

Bei einer technisch einfacheren Variante ist es vorgesehen, dass die Bewegung der Kamerahalterung oder/und die Bewegung der Furnierblatthalterungseinrichtung von Hand ausgeführt wird.

Gemäß einer Weiterbildung der Erfindung ist es jedoch vorgesehen, dass der Furnierträger mittels einer von einer Steuereinrichtung gesteuerten Antriebseinrichtung gesteuert bewegbar ist, um die optisch aufzunehmenden Furnierblattabschnitte nacheinander in Bildaufnahmestellung zu positionieren. Dabei kann das System weitgehend automatisiert sein, wobei auch die digitale Kamera mittels der Steuereinrichtung steuerbar ist, um in Abstimmung mit der Furnierblattpositionierung die Bildaufnahmen automatisch durchzuführen.

Es sei darauf hingewiesen, dass ein System zur bildhaften Erfassung eines Furnierblattes nach der Erfindung in eine vorhandene Sortier- oder Produktionsstraße oder in ein Transportsystem einer Furnierhandhabungsanlage integriert sein kann. Dabei kann es vorgesehen sein, dass mittels der Kamera aufgenommene Bilddaten zur Steuerung eines oder mehrerer Arbeitsschritte in der Sortierstraße oder der Produktionsstraße verwendet werden.

Die Bilddatenerfassung kann bei dem erfindungsgemäßen System vollautomatisch unter Kontrolle eines Steuerungsrechners durchgeführt werden.

Zur Beleuchtung des jeweils aufzunehmenden Bereichs wird eine Beleuchtungseinrichtung vorgeschlagen, welche ein dem Tageslicht entsprechendes Spektrum im sichtbaren Spektralbereich erzeugen kann. Es kommen beispielsweise matte Leuchtstoffröhren oder Halogenlampen in Frage, welche eine einigermaßen gleichmäßige Helligkeitsverteilung auf dem zu fotografierenden bzw. zu videografierenden Abschnitt des Furnierblatts ermöglichen.

Das System nach der Erfindung sollte vorzugsweise einen Rechner umfassen, dem die Bilddaten der digitalen Kamera zuzuführen sind und der dazu programmiert ist, aus den Bilddaten wenigstens einen Bilddatensatz zu erzeugen und zu speichern, der ein aus den fotografierten Furnierblattabschnitten zusammengesetztes Bild oder - im Falle einer Videoaufzeichnung - eine Videobildsequenz der Furnierflächenseite repräsentiert.

Die derzeit verfügbaren digitalen Kameras weisen üblicherweise eine kamerainterne Speicherkarte auf, die über den USB-Port oder eine serielle Schnittstelle eines Rechners ausgelesen werden kann. Der Bilddatensatz kann dann zur Darstellung des Furnierblattes auf einem Bildschirm-Anzeigegerät genutzt werden. Von der computertechnischen/softwaretechnischen Seite her sollte ein Rechner in der Lage sein, den Bilddatensatz so aufzubereiten, dass wahlweise ein verkleinertes Gesamtbild des betreffenden Furnierblatts angezeigt wird oder dass vom Nutzer am Bildschirm auszuwählende beliebige Bildausschnitte des Furnierblatts gegebenenfalls in wahlweise unterschiedlichen Vergrößerungen auf dem Bildschirm darstellbar sind.

Grundsätzlich kann das Gesamtbild in beliebige Applikationen integriert und auch mittels eines entsprechenden Druckers in Fotoqualität ausgedruckt werden.

Die Erfindung wird im Folgenden unter Bezugnahme auf die Zeichnungen näher erläutert.
- Fig. 1: ist eine Erläuterungsskizze zur Erläuterung des Verfahrens nach der Erfindung.
- Fig. 2: zeigt eine Draufsicht auf eine Furnierblatthalterungseinrichtung mit einem geführt bewegbaren Furnierblattträger.
- Fig. 3: zeigt in einer Seitenansicht die Furnierblatthalterungseinrichtung gemäß Fig. 2 im zusammengeklappten Zustand.

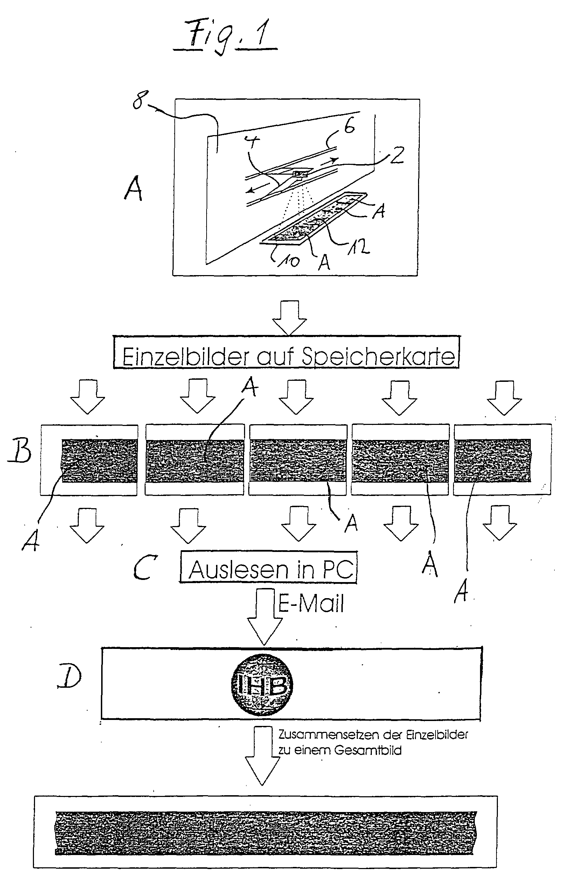

Im oberen Teil A der Fig. 1 ist schematisch eine hochwertige, farbtüchtige Digital-Spiegelreflexkamera 2 an einer Kamerahalterung 4 dargestellt, welche längs einer Führungsanordnung 6 an einer vertikalen Wand 8 in horizontaler Richtung geführt verfahrbar angebracht ist. Im Beispielsfall ist die Kamera 2 eine Fotokamera. Falls z.B. eine kontinuierliche Videobildsequenz der Flächenseite des Furniers erstellt werden soll, kann die Kamera 2 durch eine digitale Videokamera ersetzt werden. Die Kamera 2 befindet sich vertikal oberhalb einer Furnierblatthalterungseinrichtung 10, auf der ein Furnierblatt 12 im ausgebreiteten Zustand fixiert ist. Zur bildhaften Erfassung des Furnierblattes 12 wird dieses abschnittsweise mit der Kamera 2 fotografiert. Die Kamera 2 ist so eingestellt, dass sie ein scharfes Bild des jeweiligen Abschnittes A der oben liegenden Furnierblattflächenseite erzeugen kann. Je nach Brennweite befindet sich die Kamera in einer Höhe von beispielsweise 1,2 m - 2 m über dem Furnierblatt 12. Die Kamera ist vorzugsweise so eingestellt, dass das Bild des gewählten Abschnittes A des Furnierblattes dem Bildformat der Kamera näherungsweise entspricht.

Nachdem die Kamera 2 nach entsprechender Weiterbewegung längs der Führungseinrichtung 6 jeden Abschnitt A des Furnierblattes 12 aufgenommen hat, befinden sich Bilddaten der Einzelbilder in einem Speicher der digitalen Kamera 2. Dies ist üblicherweise eine Speicherkarte. Die Situation der Einzelbilderfassung auf Speicherkarte ist in Fig. 1 bei B illustriert.

Die Speicherkarte kann über einen Kartenleser, der an den USB-Port oder an eine serielle Schnittstelle eines Personal Computers angeschlossen wird, ausgelesen werden, so dass die Bilddaten zur Weiterverarbeitung in dem Personal Computer bereitstehen und die Speicherkarte der Kamera 2 für neue Fotos verwendbar ist. Der vorstehend genannte Personal Computer kann die weitere Bilddatenverarbeitung, also das Erstellen eines Bilddatensatzes übernehmen, welcher ein aus den Einzelbildern zusammengesetztes Bild repräsentiert, bei dem es sich vorzugsweise um eine Komplettabbildung der Flächenseite des Furniers 12 handelt.

Es ist auch denkbar, dass die von der Kamera-Speicherkarte ausgelesenen Einzelbilddaten als Anhangsdatei einer E-Mail an einen weiteren Rechner übertragen werden, welcher die Bildzusammensetzung mittels einer Foto-Stitch-Software übernimmt, also den Bilddatensatz erzeugt, welcher das zusammengesetzte Bild repräsentiert. Letztere Situation ist in Fig. 1 bei C und D angedeutet.

Das Gesamtbild kann dann ins Internet gestellt werden. Es ist wahlweise auch möglich, sich die Einzelbilder des Furniers als vergrößerte Ansicht mit höherer Auflösung an einem Bildschirm anzuschauen.

Wie bereits eingangs erwähnt, können die Bilddatensätze zusätzlich oder alternativ auf einen austauschbaren Datenträger, z.B. CD-ROM, gespeichert werden, welcher interessierten Kunden zur Verfügung gestellt werden kann, damit diese die Bilder am Personal Computer ansehen können.

Wie ebenfalls bereits angedeutet, gibt es verschiedene Möglichkeiten der Realisierung der Fotografierstation.

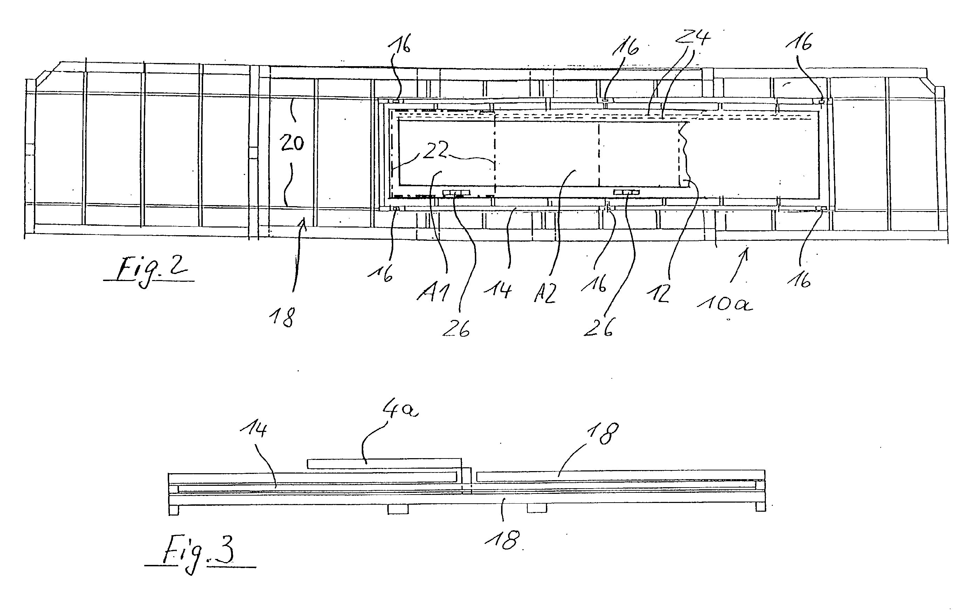

In Fig. 2 ist in einer Draufsicht eine Furnierblatthalterungseinrichtung 10a dargestellt, welche einen Furnierträger 14 in Form eines mit Laufrollen 16 ausgestatteten Wagens und eine zusammenklappbare Führungsschienenanordnung 18 für den Furnierträger 14 umfasst. Die Laufrollen 16 können auf den Führungsschienen 20 abrollen, so dass der Furnierträger 14 längs der Schienen 20 bewegt wird. Im Beispielsfalls der Fig. 2 ist die digitale Kamera (nicht gezeigt) stationär über der Furnierblatthalterungseinrichtung positioniert. Der von ihr erfasste Bildbereich ist in Fig. 2 mit einer gestrichelten Umrahmungslinie 22 angedeutet. Dieser Bildbereich ist im Wesentlichen ausgefüllt von einem Abschnitt A1 des auf dem Furnierträger 14 ausgebreiteten (teilweise dargestellten) Furnierblattes 12.

Nach Weiterbewegung des Furnierträgers 14 in Fig. 2 nach links kommt dann in entsprechender Weise der Furnierblattabschnitt A2 ins Bild, um fotografiert zu werden. Die Abschnitte A1, A2... der oben liegenden Flächenseite des Furnierblattes 12 werden somit nacheinander fotografiert, bis eine komplette Erfassung der Flächenseite des Furnierblattes 12 stattgefunden hat.

Bei 24 sind in Fig. 2 Längenmaßstäbe (Inch und Meter) dargestellt, welche abschnittsweise beim Fotografieren der Furnierblattabschnitte A1, A2 ... mitfotografiert werden.

Mit 26 ist eine Referenzfarbskala bezeichnet, die ebenfalls mitfotografiert wird, um im Gesamtbild des Furnierblattes 12 zu erscheinen.

Die Rahmenteile der Elemente 14, 18 der Furnierblatthalterungseinrichtung 10a sind vorzugsweise aus Leichtmetall, insbesondere Aluminium, gefertigt.

In Fig. 3 ist erkennbar, dass die Führungsschienenanordnung 18 zu einer kompakten Transportanordnung zusammengeklappt werden kann, wobei der Furnierträger 14 in einer Mittelstellung in die zusammengeklappte Anordnung einbezogen wird. Angedeutet ist in Fig. 3 ferner der umklappbare Repro-Arm 4a, an dem die Kamera 2 anzuordnen ist.

In der Transportanordnung gemäß Fig. 3 lässt sich die Führungsschienenanordnung 18 mit dem Furnierträger 14 vergleichsweise einfach transportieren.

Im Beispielsfall gemäß Fig. 2 hat die Führungsschienenanordnung 18 eine Länge von etwa 610 cm und eine Breite von etwa 150 cm. Der Furnierträger 14 hat eine Länge von etwa 410 cm und eine Breite von etwa 100 cm.

Zum Niederhalten eines Furnierblattes 12 auf dem Furnierträger 14 kann eine entspiegelte Glasplatte vorgesehen sein.

Darauf hinzuweisen ist auch, dass auf dem Furnierträger 14 nicht nur einzelne Furnierblätter, sondern ggf. Furnierblattstapel aufgelegt werden können, von denen jeweils das oberste Furnierblatt fotografiert wird.

Die Furnierblatthalterungseinrichtung kann Rastmittel umfassen, welche den Furnierträger 14 nach Weiterbewegung um einen jeweiligen Abschnitt jeweils festlegen.

Wie bereits erwähnt, kann ein automatischer Antrieb für den Furnierträger 14 vorgesehen sein, dessen Steuerungseinrichtung auch zur Steuerung des Fotografierprozesses herangezogen wird.

Die Bewegung des Furnierblattes 12 relativ zur Kamera 2 erfolgt vorzugsweise schrittweise von Bildabschnitt zu Bildabschnitt. Die einzelnen Abschnitte werden vorzugsweise mit geringer Randüberlappung aufgenommen. Alternativ ist auch eine Bewegung des Furnierträgers 14 mit gleichmäßiger Geschwindigkeit relativ zur Kamera möglich, wobei mit der Serienfunktion der Digitalkamera eine hohe Anzahl von Bildern aufgenommen wird, die sich gegenseitig weit überlappen. Eine kontinuierliche Bewegung des Furnierträgers wird auch vorgezogen, falls als Kamera 2 eine Videokamera verwendet wird, um eine Videoaufzeichnung der Furnierblattflächenseite durchzuführen.

In den Beispielen ist bisher davon ausgegangen worden, dass stets die gesamte Abschnittsbreite bei jeder Aufnahme erfasst wird. Selbstverständlich kann es auch vorgesehen sein, dass auch über die Breite des Furnierblatts hinweg eine Aufteilung in Abschnitte erfolgt, welche einzeln zu fotografieren sind. Hierzu könnte die Kamera quer zur Bewegungsrichtung des Furnierträgers 14 bewegbar gehalten sein.

## Patentansprüche

1. Verfahren zur bildhaften Erfassung eines Furnierblattes (12), wobei man eine Flächenseite des Furnierblattes (12) mit einer Kamera (2) aufnimmt,
**dadurch gekennzeichnet,**
**dass** man die Flächenseite abschnittsweise mit einer digitalen Kamera (2) fotografiert oder/und mit einer digitalen Videokamera aufzeichnet, dass man die dabei erhaltenen Bilddaten einer Bilddatenverarbeitung unterzieht, um wenigstens einen Bilddatensatz zu erzeugen und zu speichern, der ein auf einem Anzeigegerät darstellbares Bild oder - im Falle der Videoaufzeichnung - eine auf einem Anzeigegerät darstellbare Videobildsequenz der Flächenseite des Furnierblattes (12) repräsentiert.

2. Verfahren nach Anspruch 1, **dadurch gekennzeichnet, dass** man die gemäß Anspruch 1 erstellten Bilddatensätze mehrerer unterschiedlicher Furnierblätter (12) auf einem austauschbaren Datenträger, insbesondere CD-ROM, DVD-ROM, MO-Speicher etc., speichert, um die Furnierblätter (12) zu katalogisieren.

3. Verfahren nach Anspruch 1, **dadurch gekennzeichnet, dass** man nach Anspruch 1 erhaltene Bilddatensätze in einen Datenspeicher speichert, auf den über ein Computernetzwerk, insbesondere über das Internet, zugegriffen werden kann, um die Bilddaten zum Zwecke der Darstellung der betreffenden Furnierblätter (12) an ein Anzeigegerät zu übertragen.

4. Verfahren nach einem der vorhergehenden Ansprüche, **dadurch gekennzeichnet, dass** man beim Fotografieren bzw. bei der Videoaufzeichnung des jeweiligen Furnierblattes (12) einen Referenzmaßstab (24) mitfotografiert bzw. mitaufzeichnet.

5. Verfahren nach einem der vorhergehenden Ansprüche, **dadurch gekennzeichnet, dass** man beim Fotografieren bzw. bei der Videoaufzeichnung des jeweiligen Furnierblattes (12) eine Referenzfarbskala (26) mitfotografiert bzw. mitaufzeichnet.

6. System zur bildhaften Erfassung eines Furnierblattes,
**gekennzeichnet durch** eine Bildaufnahmestation mit einer digitalen Fotokamera (2) oder/und digitalen Videokamera, die an einer Kamerahalterung (4; 4a) angeordnet ist, und einer Furnierblatthalterungseinrichtung (10; 10a) zur Positionierung eines ausgebreiteten Furnierblattes (12) relativ zur Kamera (2), wobei die digitale Kamera (2) und die Furnierblatthalterungseinrichtung (10; 10a) kontinuierlich oder diskontinuierlich in verschiedene Bildaufnahmestellungen relativ zueinander einstellbar sind und in jeder Bildaufnahmestellung ein jeweiliger Abschnitt (A) einer Flächenseite eines in der Furnierblatthalterungseinrichtung (10; 10a) befindlichen Furnierblattes (12) fotografierbar oder ggf. videografierbar ist, so dass die Flächenseite abschnittsweise mittels der Kamera (2) fotografisch abtastbar ist, um Bilddaten zu erzeugen und zu speichern, die einer Bilddatenverarbeitung zur Erzeugung wenigstens eines Bilddatensatzes zuführbar sind, welcher ein Bild oder - im Falle einer Videoaufzeichnung - eine Videobildsequenz der Flächenseite des Furnierblattes (12) repräsentiert.

7. System nach Anspruch 6, **dadurch gekennzeichnet, dass** die Furnierblatthalterungseinrichtung (10a) einen Furnierträger (14) aufweist, auf dem ein Furnierblatt (12) im ausgebreiteten Zustand fixierbar ist, und dass der Furnierträger (14) an einer Führungseinrichtung (18) geführt bewegbar ist, um aufeinander folgend zu fotografierende Abschnitte (A) einer Flächenseite eines Furnierblattes in Bildaufnahmestellung relativ zur Kamera (2) zu positionieren.

8. System nach Anspruch 7, **dadurch gekennzeichnet, dass** der Furnierträger (14) als Wagen mit Rollen (16) ausgebildet ist und dass die Führungseinrichtung (18) Schienen (20) aufweist, an denen die Rollen (16) des Furnierträgers (14) geführt abrollen können.

9. System nach Anspruch 7 oder 8, **dadurch gekennzeichnet, dass** der Furnierträger (14) mittels einer von einer Steuereinrichtung gesteuerten Antriebseinrichtung gesteuert bewegbar ist, um die zu fotografierenden Furnierblattabschnitte (A) nacheinander in Bildaufnahmestellung zu positionieren.

10. System nach Anspruch 9, **dadurch gekennzeichnet, dass** die digitale Kamera (2) mittels der Steuereinrichtung steuerbar ist, um in Abstimmung mit der Furnierblattpositionierung die Bildaufnahme durchzuführen.

11. System nach einem der Ansprüche 6 - 10, **gekennzeichnet durch** eine Beleuchtungseinrichtung zur Beleuchtung eines in der Furnierblatthalterungseinrichtung (10) ausgebreiteten Furnierblattes.

12. System nach einem der Ansprüche 6 - 11, **dadurch gekennzeichnet, dass** die Kamerahalterungseinrichtung (4) relativ zur Furnierblatthalterungseinrichtung (10) ggf. mittels einer Steuereinrichtung gesteuert geführt bewegbar ist, um verschiedene Abschnitte (A) eines auf der Furnierblatthalterungseinrichtung (10) ausgebreiteten Furnierblattes (12) fotografisch abzutasten.

13. System nach einem der Ansprüche 6 - 12, **gekennzeichnet durch** einen Rechner, dem die Bilddaten der digitalen Kamera (2) zuzuführen sind und der dazu programmiert ist, aus den Bilddaten wenigstens einen Bilddatensatz zu erzeugen und zu speichern, der ein aus den fotografierten Furnierblattabschnitten zusammengesetztes Bild oder - im Falle einer Videoaufzeichnung - eine Videobildsequenz der Flächenseite des Furnierblattes repräsentiert.

14. System nach Anspruch 13, **gekennzeichnet durch** ein von einem Rechner gesteuertes Bildschirmanzeigegerät zur Darstellung des Furnierblattes.

15. System nach Anspruch 14, **dadurch gekennzeichnet, dass** der Rechner dazu programmiert ist, wahlweise eine jeweilige Furnierblatt-flächenseite komplett, vorzugsweise verkleinert, auf einem Bildschirmanzeigegerät anzuzeigen.

16. System nach Anspruch 14 oder 15, **dadurch gekennzeichnet, dass** der Rechner dazu programmiert ist, wahlweise verschiedene Bildausschnitte des Furnierblatts (12) auf dem Bildschirmanzeigegerät darzustellen.

17. System nach einem der Ansprüche 14 - 16, **dadurch gekennzeichnet, dass** der Rechner dazu programmiert ist, bei der Furnierblattdarstellung wahlweise unterschiedliche Vergrößerungseinstellungen vorzunehmen.

18. System nach einem der Ansprüche 6 bis 17, **dadurch gekennzeichnet, dass** es in eine Sortier- oder Produktionsstraße einer Furnierbearbeitungsaniage integriert ist.
